# EUROPÄISCHE PATENTSCHRIFT

(11) **EP 3 580 092 B1**
(45) Veröffentlichungstag und Bekanntmachung des Hinweises auf die Patenterteilung: **18.09.2024**
(21) Anmeldenummer: 18709246.5
(22) Anmeldetag: 07.02.2018
(51) Int. Cl.: B60N 2/80, B60N 2/70

(54) **KÖPFSTÜTZE**
HEADREST
APPUIE-TÊTE

(30) Priorität: 09.02.2017 DE 102017001218; 13.12.2017 DE 102017129831; 13.12.2017 DE 102017129830; 13.12.2017 DE 102017129857
(43) Veröffentlichungstag der Anmeldung: 18.12.2019
(73) Patentinhaber: GRAMMER AG, 92289 Ursensollen (DE)
(72) Erfinder: BÖSL, Manuel, 92272 Freudenberg (DE)
(74) Vertreter: Roche, von Westernhagen & Ehresmann
(86) Internationale Anmeldenummer: PCT/DE2018/000022
(87) Internationale Veröffentlichungsnummer: WO 2018/145684

(56) Entgegenhaltungen:
- WO-A1-2017/005660
- DE-T2- 69 500 785
- GB-A- 2 315 408
- US-A1- 2005 127 735
- US-A1- 2011 133 531

## Beschreibung

Die Erfindung betrifft eine Kopfstütze für einen Sitz, insbesondere für einen Fahrzeugsitz. Ein Fahrzeug kann im Sinne der Erfindung ein Land-, Luft- oder Wasserfahrzeug sein. Landfahrzeuge sind z.B. Kraftfahrzeuge und Schienenfahrzeuge. Die Kopfstütze umfasst eine Kopfanlagevorrichtung mit einer Kopfanlagefläche sowie eine Lagervorrichtung zur Halterung an einem Fahrzeugsitz.

Aus der DE 10 2015 212 510 A1 ist eine Kopfstütze bekannt, die einen Kopfstützenkörper umfasst, welcher mit einer Lagervorrichtung an einem Sitz lagerbar ist. Der Kopfstützenkörper kann einteilig aus Kunststoff hergestellt sein.

Die DE 32 26 149 C2 offenbart eine Kopfstütze, bei welcher das Kopfanlageteil von einem Bügel gebildet ist, welcher mit einem Schaum, oder einer textilen Bespannung versehen ist.

Aus der US 2005/0127735 A1 ist ein Sitz mit einer Kopfstütze bekannt, wobei die Kopfstütze einen Träger umfasst, an welchen ein elastisches Material angeformt ist.

Die GB 2 315 408 A betrifft eine Kopfstütze, die eine im Wesentlichen starre Rückplatte aufweist, die mit zwei Tragstangen verbunden ist. An der Rückplatte ist ein plastisch verformbares Material in Form eines Verformungsteils derart angebracht, dass es sich bei einem Unfall in Richtung der Rückplatte verformen kann und dabei Bewegungsenergie absorbiert. Dieses Verformungsteil kann z.B. mehrere sich vertikal erstreckende Finger aufweisen, zwischen denen Zwischenräume ausgebildet sind. Eine Füllung und Polsterung der Kopfstütze können vorgesehen werden (siehe Seite 5, Absatz 2).

Die US 2011/133531 A1 beschreibt einen Fahrzeugsitz mit einem Lehnenteil und einem Sitzteil wobei das Lehnenteil und das Sitzteil derart aufgebaut sind, dass zwischen einem unteren und einem oberen Rahmen ein Gewebe eingeklemmt wird. Auf diese Weise soll das Gewicht des Fahrzeugs reduziert werden und die Belüftung des Sitzinsassen verbessert werden. Eine Kopfstütze ist kurz erwähnt (siehe Ende Absatz 18), aber nicht näher beschrieben.

Die DE 695 00 785 T2 betrifft einen Fahrzeugsitz mit einer Kopfstütze und einer an der Kopfstütze befestigbaren Nackenstütze. Die Aufgabenstellung bestand darin, eine verbesserte Nackenstütze zu schaffen. In dieser Druckschrift wird die Kopfstütze als Halterung für die Nackenstütze erwähnt und ansonsten nicht detailliert darauf eingegangen.

Die WO 2017/005660 A1 betrifft eine Kopfstütze. Die Kopfstütze umfasst einen Kopfstützenkörper, welcher einen Rahmen mit einem oder mehreren innenliegenden, eine Auflagefläche bildenden flexiblen Auflageelementen aufweist, die durch Urformen aus einem Kunststoffmaterial, insbesondere aus einem Werkstoff frei von aufgeschäumten Materialien, oder aus einem Verbundwerksstoff gebildet ist. Die Kopfstütze kann einteilig oder mehrteilig ausgebildet sein.

Es war Aufgabe der Erfindung eine Kopfstütze zu schaffen, die einfach einen einfachen Aufbau besitzt und damit einfach herstellbar ist.

Die Aufgabe wird gelöst durch eine Kopfstütze mit den Merkmalen des Anspruchs 1.

Die Kopfstütze umfasst eine Kopfanlagevorrichtung, an welchem ein Kopfanlagebereich mit einer Kopfanlagefläche ausgebildet ist, die als Widerlager für den Kopf eines Sitzinsassen dient. Die

Kopfanlagevorrichtung ist an einer Lagervorrichtung gehalten, mittels welcher sie an dem Sitz gelagert ist.

Die Kopfanlagevorrichtung ist einteilig ausgebildet. Insbesondere ist die Kopfanlagevorrichtung als Kunststoffspritzgießteil ausgebildet. Z.B. ist die Kopfanlagevorrichtung als ungeschäumtes Kunststoffspritzgießteil hergestellt. Die Kopfanlagevorrichtung ist z.B. aus einer Materialkomponente oder aus mehreren Materialkomponenten hergestellt. Wenn das Kunststoffspritzgießteil aus mehreren Materialkomponenten hergestellt ist, sind diese z.B. in einen Werkstoff integriert, wie im Falle eines Faserverbundwerkstoffs oder, wie im Falle eines Zweikomponenten-Spritzgießverfahrens, z.B. derart miteinander verbunden, dass ein Teil gebildet wird.

Je nachdem, ob die Lagervorrichtung an dem Kopfanlagebereich angeformt ist oder ein separates Teil bildet, welches an der Kopfanlagevorrichtung befestigt ist, bildet die Kopfanlagevorrichtung oder der Kopfanlagebereich kein geschlossenes Gehäuse, sondern ist offen ausgebildet. Mit anderen Worten, die Kopfanlagevorrichtung bildet keinen geschlossenen Hohlraum oder Innenraum.

Der Kopfanlagebereich ist als Platte, insbesondere als dünne Platte mit einer Materialdicke von ca. 1,5 mm bis 10 mm, ausgebildet. Platte ist im Sinne der Erfindung als dünne Wand zu verstehen, die Platte muss nicht eben ausgebildet sein, sondern kann vielmehr frei geformt sein. Die Platte ist insbesondere aus Vollmaterial gebildet. Insbesondere ist die Platte aus ungeschäumtem Material gebildet. Der Kopfanlagebereich oder die gesamte Kopfanlagevorrichtung weist freie Seitenbereiche auf. Ein unterer Endbereich des Kopfanlagebereichs ist mit der Lagervorrichtung verbunden.

In einer Seitenansicht der Kopfstütze weist die Platte z.B. eine G-Form auf.

Bei der G-Form ist die Platte im Kopfanlagebereich im Wesentlichen vertikal ausgebildet und bildet einen freien oberen Endbereich. Der untere Endbereich des Kopfanlagebereichs ist dann wie bei einem G gebogen und verläuft nach hinten und wieder zurück zu dem Kopfanlagebereich.

Der Kopfanlagebereich bildet ein freies Ende. Ein unterer Endbereich des Kopfanlagebereichs ist mit der Lagervorrichtung verbunden. Der obere Endbereich bildet ein freies Ende. Die Ausbildung des Kopfanlagebereichs mit einem freien Ende hat den Vorteil, dass der Kopfanlagebereich einen größeren Federweg zurücklegen kann, wenn das freie Ende flexibel verformt werden kann.

An dem hinteren Bereich ist die Kopfanlagevorrichtung z.B. mit Lagermitteln zur Befestigung der Lagervorrichtung versehen. Die Lagermittel können z.B. als Aufnahmesitze für Tragstangen oder für einen Tragstangenbügel ausgebildet sein.

Gemäß einer Ausgestaltung der Erfindung bildet die Kopfanlagevorrichtung und / oder die Haltevorrichtung eine Prallfläche für den Kopfanlagebereich. Bei starken Belastungen stellt die Prallfläche eine Begrenzung für die Verformung des Kopfanlagebereichs dar. Mit anderen Worten, der Kopfanlagebereich gerät bei einer bestimmten Verformung der Kopfanlagevorrichtung mit der Prallfläche in Kontakt, die eine weitere Verformung verhindert. Mit diesen Merkmalen wird verhindert, dass sich der Kopfanlagebereich bei großen Belastungen so stark verformt, dass er seine Sicherheitsfunktion nicht mehr wahrnehmen kann.

Der Kopfanlagebereich der Kopfanlagevorrichtung kann unterschiedlich ausgebildet und unterschiedlich gelagert sein. Der Kopfanlagebereich ist fest an der Kopfstütze, insbesondere an der Kopfanlagevorrichtung, gehalten.

Der Kopfanlagebereich weist z.B. eine konkave Form auf, wobei Seitenbereiche des Kopfanlagebereichs bzgl. einer vertikalen Mittelachse vorspringen.

Die Kopfanlagevorrichtung kann z.B. einen Rahmen aufweisen, welcher z.B. dem Kopfanlagebereich zugeordnet ist. An dem Rahmen ist z.B. eine Bespannung, eine Folie oder eine andere Struktur angeformt. Die Struktur kann z.B. eine von dem Rahmen unterschiedliche Verformbarkeit oder Verlagerbarkeit aufweisen. Während sich z.B. der Rahmen lediglich bei Einwirkung einer großen Kraft aufgrund der Verformbarkeit der Kopfanlagevorrichtung verlagert, kann sich die Struktur schon bei Einwirkung geringerer Kräfte verformen, z.B. an den Kopf des Sitzinsassen anpassen. Die Bespannung ist z.B. wenigstens teilweise transparent, so dass der Kopfanlagebereich die Sicht nach hinten ermöglicht.

Z.B. ist der Kopfanlagebereich mit einer elastischen Struktur versehen. Die elastische Struktur ist z.B. von einem Rahmen der Kopfanlagevorrichtung begrenzt und daran gehalten. Die Struktur ist elastisch verformbar, so dass sie bei Anlage des Kopfes elastisch nachgibt. Die elastische Struktur ist z.B. derart ausgebildet, dass sie sich relativ zu dem Rahmen verformen kann. Die elastische Struktur kann z.B. mit einer anderen Elastizität versehen sein, als der Rahmen des Kopfanlagebereichs. Es wird Bezug genommen auf die gesonderte Patentanmeldung hinsichtlich der elastischen Struktur mit dem Aktenzeichen DE 10 2017 129 831.2.

Gemäß einer Alternative kann an dem Rahmen eine Folie, insbesondere eine transparente Folie, oder ein Netz gehalten sein. Auf diese Weise ist die Kopfanlagefläche durchsichtig.

Die Kopfanlagefläche ist z.B. einem gesonderten, die Kopfanlagefläche ausbildenden Teil zugeordnet, welches mit wenigstens einer Feder an einem Rahmen der Kopfanlagevorrichtung oder einem Rahmen des Kopfanlagebereichs verbunden ist. Die Platte kann dann bei Einwirkung einer Kraft auf die Kopfanlagefläche unter Verformung der Feder relativ zu dem Rahmen verlagert werden. Unter Feder ist in diesem Sinne jede Art von elastisch verformbarem Material zu verstehen. Es wird Bezug genommen auf die gesonderte Patentanmeldung mit dem Aktenzeichen DE 10 2017 129 830.4.

Der Kopfanlagebereich kann z.B. mit wenigstens einem Durchbruch, insbesondere mit einer Mehrzahl von Durchbrüchen, versehen sein. Im Falle, dass die Kopfanlagevorrichtung von einer Platte gebildet ist, ist die Platte im Kopfanlagebereich mit Durchbrüchen versehen. Der Kopfanlagebereich bildet z.B. ein Gitter aus. Damit kann eine bessere Sicht nach hinten gewährleistet werden und zudem eine bessere Belüftung sichergestellt sein. Außerdem wird hierdurch ein geringeres Gewicht der Kopfstütze erreicht.

An dem Kopfanlagebereich können Befestigungsmittel zur Befestigung einer weichen Auflage ausgebildet sein. Die weiche Auflage kann z.B. von einem Kissen, einer textilen Matte oder einem Flies gebildet sein. Die weiche Auflage dient der Komforterhöhung des Sitzinsassen.

Die Kopfanlagevorrichtung oder die gesamte Kopfstütze ist z.B. von einem ersten relativ harten Kunststoff gebildet und weist im Kopfanlagebereich wenigstens teilweise einen zweiten weichen Kunststoff auf. Der zweite Kunststoff kann z.B. im Zweikomponenten-Spritzgießverfahren an die Kopfanlagevorrichtung angespritzt werden. Die Kopfstütze oder die Kopfanlagevorrichtung ist z.B. einschließlich des Kopfanlagebereichs aus hartem Material geformt. Im Kopfanlagebereich ist das weiche Material z.B. auf das harte Material aufgebracht. Die weiche Komponente ist z.B. dem Sitzinsassen zugewandt an dem Kopfanlagebereich angeordnet. Das weiche Material kann z.B. ein Silikonkunststoff sein oder einen solchen enthalten.

Weitere Vorteile der Erfindung ergeben sich anhand der nachfolgenden Beschreibung von in den Fig. schematisch dargestellten Ausführungsbeispielen. Es zeigen:
Fig. 1 eine perspektivische Ansicht einer einteiligen Kopfstütze mit einem Kopfanlagebereich und einem Lagerbereich,
Fig. 2 eine Seitenansicht der Kopfstütze gemäß Fig. 1,
Fig. 3 eine Frontansicht gemäß Ansichtspfeil III in Fig. 2,
Fig. 4 eine Schnittansicht gemäß Schnittlinie IV - IV in Fig. 3,
Fig. 5 eine perspektivisch Darstellung eines zweiten Ausführungsbeispiels einer Kopfstütze, wobei die Kopfstütze eine Kopfanlagefläche mit einer federnden Struktur aufweist,
Fig. 6 eine Seitenansicht der Kopfstütze gemäß Fig. 5,
Fig. 7 eine Frontansicht gemäß Ansichtspfeil VII in Fig. 6,
Fig. 8 eine perspektivische Ansicht der Kopfstütze gemäß Fig. 5, wobei die Kopfanlagefläche mit einem Kissen versehen ist,
Fig. 9 eine Seitenansicht der Kopfstütze gemäß Fig. 8,
Fig. 10 eine Ansicht gemäß Ansichtspfeil X in Fig. 9,
Fig. 11 eine Frontansicht gemäß Ansichtspfeil XI in Fig. 9,
Fig. 12 eine Schnittansicht gemäß Schnittlinie XII - XII in Fig. 11,
Fig. 13a eine perspektivische Ansicht eines anderen Ausführungsbeispiels der Kopfstütze, welches grundsätzlich dem Ausführungsbeispiel gemäß der Fig. 5 bis 7 entspricht, wobei gemäß dem einzigen Unterschied die Kopfanlagefläche starr ausgebildet ist,
Fig. 13b eine Seitenansicht der Kopfstütze gemäß Fig. 13a,
Fig. 13c eine Ansicht gemäß Ansichtspfeil Xlllc in Fig. 13b,
Fig. 13d eine Frontansicht gemäß Ansichtspfeil Xllld in Fig. 13b,
Fig. 13e eine Schnittdarstellung gemäß Schnittlinie XIIIe - XIIIe in Fig. 13d,
Fig. 14 eine perspektivische Ansicht eines anderen Ausführungsbeispiels einer Kopfstütze,
Fig. 15 eine Seitenansicht der Kopfstütze gemäß Fig. 14,
Fig. 15a eine Ansicht gemäß Ansichtspfeil XVa in Fig. 15,
Fig. 16 eine Frontansicht gemäß Ansichtspfeil XVI in Fig. 15,
Fig. 17 eine Schnittdarstellung gemäß Schnittlinie XVII - XVII in Fig. 16,
Fig. 18 eine Schnittansicht eines weiteren Ausführungsbeispiels einer Kopfstütze, die sich von dem in den Fig. 14 bis 17 dargestellten Ausführungsbeispiel nur in dem Punkt unterscheidet, dass der Kopfanlagebereich mit einer weiteren Materialkomponente versehen ist,
Fig. 18a in Anlehnung an Fig. 18 eine Schnittdarstellung der Kopfanlagevorrichtung gemäß Fig. 18, wobei die außerhalb der Schnittebene liegenden Kanten nicht dargestellt sind,
Fig. 19 eine perspektivische Ansicht eines anderen Ausführungsbeispiels der Kopfstütze gemäß Fig. 5,
Fig. 20 eine Seitenansicht der Kopfstütze gemäß Fig. 19,
Fig. 21 eine rückwärtige Ansicht gemäß Ansichtspfeil XXI in Fig. 20,
Fig. 22 eine Frontansicht gemäß Ansichtspfeil XXII in Fig. 20,
Fig. 23 eine Schnittansicht gemäß Schnittlinie XXIII - XXIII in Fig. 22,
Fig. 24 die Kopfanlagevorrichtung der Kopfstütze, wobei ein Federteil in einer Ausgangsposition angeordnet sind,
Fig. 25 die Kopfanlagevorrichtung der Kopfstütze, wobei das Federteil in der maximal ausgelenkten Position angeordnet ist.

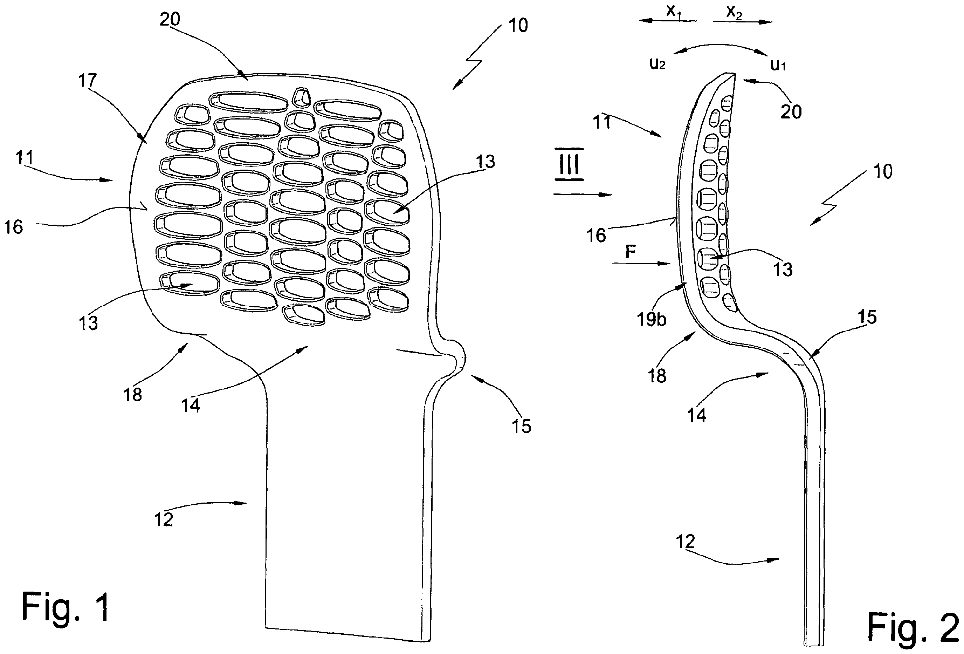

Eine Kopfstütze gemäß dem ersten Ausführungsbeispiel (siehe die Fig. 1 bis 4) insgesamt ist in den Fig. mit dem Bezugszeichen 10 bezeichnet. Diese Kopfstütze 10 ist nicht Teil der vorliegenden Erfindung.

Die Kopfstütze 10 ist einteilig ausgebildet. Die gesamte Kopfstütze 10 ist als dünne Platte, d.h. als dünne Wand mit einer Dicke von z.B. 1,5 bis 10 mm geformt. Insbesondere ist die Platte schaumlos ausgebildet. Die Platte ist z.B. aus Vollmaterial ausgebildet, d.h. sie weist im Wesentlichen keine Lufteinschlüsse auf. Sie kann z.B. als Kunststoffspritzgießteil gefertigt sein. Es kommen aber auch andere Materialien, wie z.B. Metall oder Verbundmaterialien, wie Faserverbundwerkstoffe, in Betracht. Die Kopfstütze 10 umfasst eine Kopfanlagevorrichtung 11 und eine Lagervorrichtung 12, die einteilig mit der Kopfanlagevorrichtung 11 verbunden ist. Die Kopfstütze 10 kann z.B. in einem Formarbeitsgang erzeugt werden.

Die Kopfanlagevorrichtung 11 umfasst einen Kopfanlagebereich 17 mit einer Kopfanlagefläche 16. Der Kopfanlagebereich 17 ist mit einer Mehrzahl von Aussparungen 13 versehen, so dass eine Gitterstruktur gebildet ist. Die Aussparungen 13 erlauben z.B. eine Durchsicht durch den Kopfanlagebereich 17 und haben eine Materialersparnis sowie eine Gewichtsersparnis zur Folge. Gemäß einer alternativen Ausführung könnte der Kopfanlagebereich 17 aber auch ohne Aussparungen 13, d.h. als geschlossene Wand ausgebildet sein.

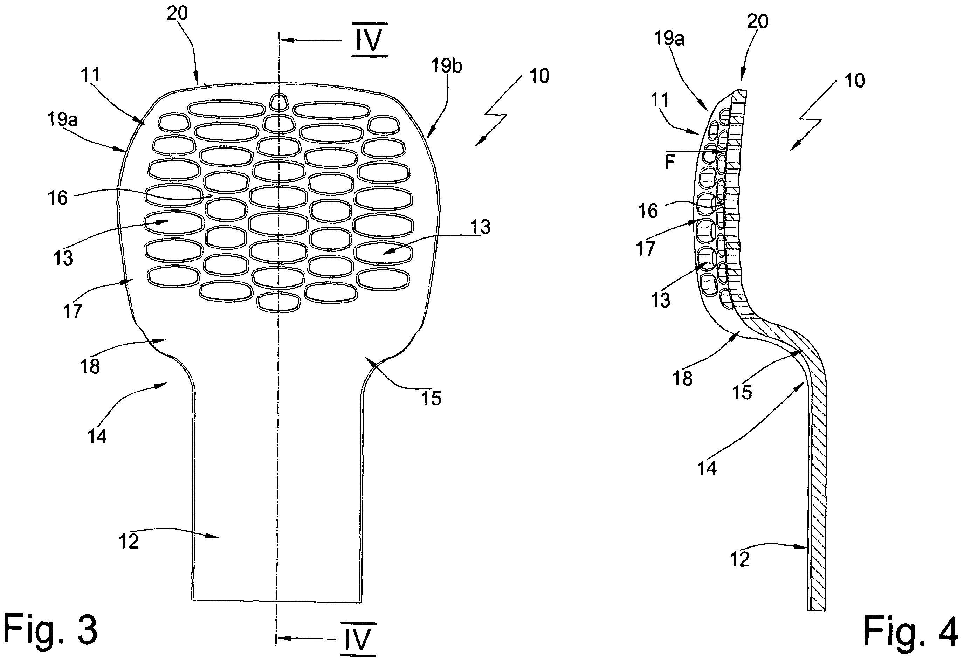

Die Kopfanlagevorrichtung 11 mit dem Kopfanlagebereich 17 ist als sich etwa vertikal erstreckende Platte ausgebildet, die einen oberen Bereich 20 umfasst, welcher ein freies Ende bildet. In einer Seitenansicht ist die Kopfanlagevorrichtung 11 etwa I-förmig ausgebildet und erstreckt sich z.B. etwa in einer Ebene. Ein unterer Bereich 18 der Kopfanlagevorrichtung 11 ist mit der Lagervorrichtung 12 einteilig verbunden. Seitenbereiche 19a und 19b sind ebenfalls frei ausgebildet. Die Seitenbereiche 19a und 19b springen bezüglich einem mittleren Bereich, welcher z.B. die Schnittebene gemäß Fig. 4 einschließt, vor, so dass die Kopfanlagefläche 16 eine konkave Form aufweist. Die gesamte Kopfstütze einschließlich dem Kopfanlagebereich ist von einem steifen Material gebildet.

Die Lagervorrichtung 12 ist höhenverstellbar oder fest an einer Sitzstruktur eines nicht dargestellten Fahrzeugsitzes befestigbar. Die Lagervorrichtung 12 hat in einem oberen Bereich 14 eine Biegung 15, wodurch die Kopfanlagevorrichtung 11 in Bezug auf die Lagervorrichtung 12 weiter vorne in Richtung x1, d.h. näher an dem Sitzinsassen, angeordnet ist und der Übergang zwischen der Lagervorrichtung 12 und der Kopfanlagevorrichtung 11 eine S-Form aufweist.

Das Material der Kopfstütze 10 ist z.B. elastisch verformbar, so dass die Kopfanlagevorrichtung 11 relativ zu der Lagervorrichtung 12 in Richtung u1 verschwenkbar ist, wenn eine Kraft F in Richtung x2 auf die Kopfanlagefläche 16 des Kopfanlagebereichs 17 wirkt. Sobald die Kraft F entfällt, wird die Kopfanlagevorrichtung 11 in Richtung u2 in ihre Ausgangsform gemäß der Fig. 1 bis 4 zurückgestellt. Die freie Verformbarkeit aus der in den Fig. 1 bis dargestellten Position in die Richtung u1 ergibt sich aus der elastischen Verformbarkeit des Materials sowie daraus, dass die Seitenbereiche 19a und 19b und der obere Bereich 14 frei ausgebildet sind.

Das Ausführungsbeispiel gemäß der Fig. 1 bis 4 weist eine schmale Bauform auf, wie in der Seitenansicht gemäß Fig. 2 zu erkennen ist. Die Kopfstütze 10 ist aufgrund der Einteiligkeit einfach herstellbar und bezüglich der Farbe und der Formgebung flexibel gestaltbar.

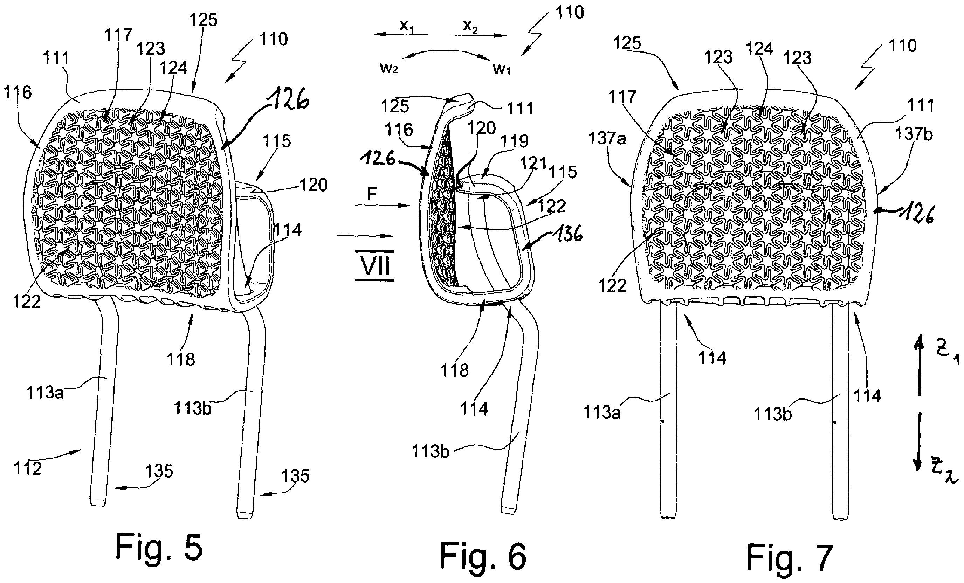

Ein zweites Ausführungsbeispiel ist in den Fig. 5 bis 7 dargestellt. Die Kopfstütze insgesamt ist in den Fig. mit dem Bezugszeichen 110 bezeichnet.

Die Kopfstütze 110 umfasst eine Kopfanlagevorrichtung 111 die ein gesondertes Teil bildet, sowie eine Lagervorrichtung 112. Die Lagervorrichtung 112 umfasst Tragstangen 113a und 113b, die fest mit dem Kopfanlagevorrichtung 111 verbunden sind. Die Tragstangen 113a und 113b weisen jeweils einen unteren Endbereich 135 auf, welcher fest oder in Richtung z1 und z2 höhenverstellbar an einem nicht dargestellten Fahrzeugsitz gelagert werden kann. Alternativ zu den Tragstangen 113a und 113b könnte auch ein Tragstangenbügel verwendet werden. Gemäß einer weiteren Alternative könnte die Lagervorrichtung 112 einen Bereich aufweisen, der einteilig - z.B. aus Kunststoffspritzguss - mit dem Kopfanlagevorrichtung 111 herstellbar ist und der an dem Fahrzeugsitz lagerbar ist.

Die Kopfanlagevorrichtung 111 umfasst einen Lagerbereich 115 sowie einen Kopfanlagebereich 116 mit einer Kopfanlagefläche 117. Die Kopfanlagevorrichtung 111 ist von einer Platte schaumfrei gebildet. Sie ist aus Vollmaterial gebildet. Bezüglich einer vertikalen Mittelachse ist die Kopfanlagefläche 117 konkav ausgebildet, d.h. Seitenbereiche springen bzgl. eines mittleren Bereichs vor. In der Seitenansicht gemäß Fig. 6 hat die Kopfanlagevorrichtung 111 etwa eine G-Form oder Spiralform. In einem unteren Bereich 118 weist die Kopfanlagevorrichtung 111 Öffnungen 114 auf, die von den Tragstangen 113a bzw. 113b durchgriffen werden. Die Öffnungen 114 bilden jeweils ein Lager zur Lagerung der Kopfanlagevorrichtung 111. Ein oberes Ende der Tragstangen 113a und 113b ist mit einer Befestigung 121 fest mit einem in Richtung des Kopfanlagebereichs 116 zurückverlaufenden Abschnitt 119 des Lagerbereichs 115 verbunden.

Der Lagerbereich 115 ist klammerartig geformt und umfasst den etwa horizontal ausgebildeten unteren Bereich 118, den ebenfalls etwa horizontal verlaufenden Abschnitt 119 sowie einen etwa vertikal verlaufenden Bereich 136.

Der Abschnitt 119 umfasst eine Prallfläche 120, die einen Anschlag für den Kopfanlagebereich 116 bildet, wenn dieser bei einer auf die Kopfanlagefläche 117 wirkenden Kraft F durch Verformung in Richtung w1 schwenkt.

An einer Oberseite bildet der Kopfanlagebereich 116 ein freies Ende 125. Darüber hinaus sind Seitenbereiche 137a und 137b des Kopfanlagebereichs 116 ebenfalls frei ausgebildet. Die Kopfanlagevorrichtung 111 ist derart flexibel ausgebildet, dass der Kopfanlagebereich 116, insbesondere ein Rahmen 126 des Kopfanlagebereichs 116, relativ zu dem Lagerbereich 115 elastisch verformbar ist, insbesondere in die Richtungen w1 und w2 schwenkbar ist, wenn die Kraft F auf die Kopfanlagefläche 117 wirkt. Bei einer Entlastung der Kopfanlagefläche 117 schwenkt der Kopfanlagebereich 116 in Richtung w2 zurück. Der Kopfanlagebereich 116 geht in den unteren Bereich 118 über.

Darüber hinaus ist der Kopfanlagebereich 116 mit einer federnden Struktur 122 versehen. Die Struktur 122 ist mit dem Rahmen 126 verbunden. Die Struktur 122 umfasst Flächenbereiche 123, die mittels wenigstens eines S-förmigen Stegs 124 mit wenigstens einem anderen Flächenbereich 123 verbunden sind. Die Stege 124 sind elastisch verbiegbar und in sich tordierbar. Aufgrund der Form der Stege 124 kann auch bei Verwendung eines steifen Materials aufgrund der Kumulation der elastischen Verformungen der Stege 124 ein großer Federweg erreicht werden. Die Struktur 122 kann sich also unter der Einwirkung einer auf die Kopfanlagefläche 117 wirkenden Kraft F aus einer in Fig. 6 dargestellten Grundform in Richtung x2 verformen und bei nachlassender Kraft F in Richtung x1 in die Ausgangsform zurückverformen. In Bezug auf die Struktur 122 wird verwiesen auf die Anmeldung mit dem Aktenzeichen DE 10 2017 129 831.2 .

Gemäß einer Alternative kann anstelle der Struktur 122 an dem Rahmen 126 eine Folie, insbesondere eine transparente Folie, oder ein Netz gehalten sein. Auf diese Weise ist die Kopfanlagefläche durchsichtig.

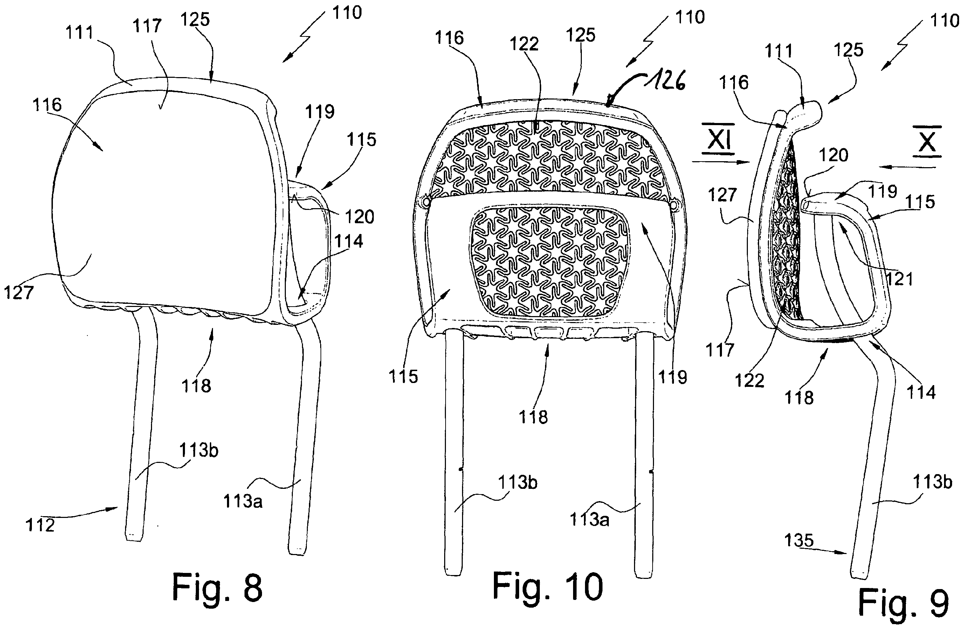

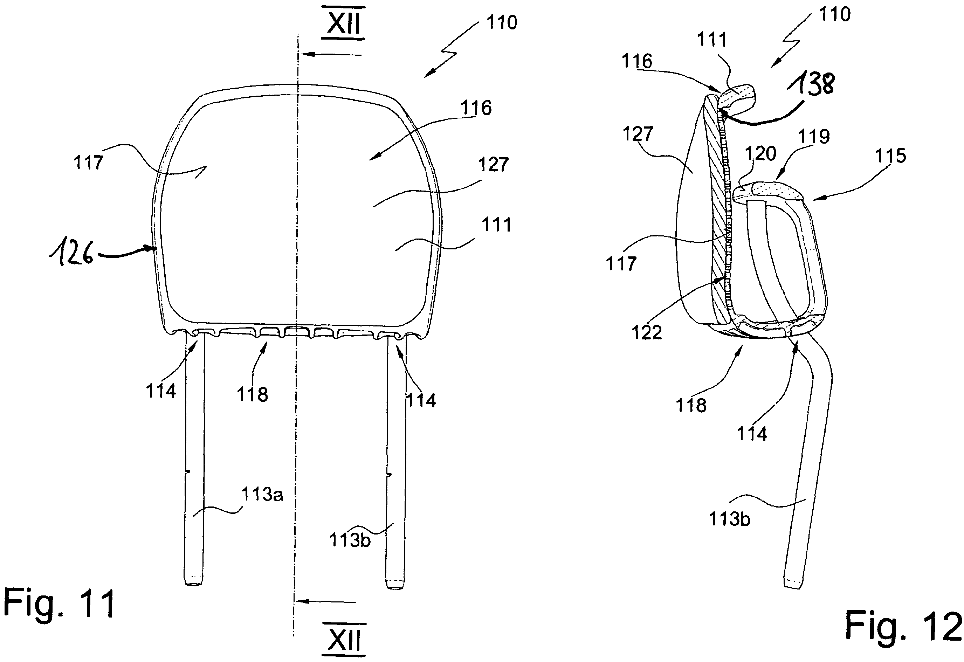

Die in den Fig. 8 bis 12 dargestellte Kopfstütze 110 entspricht der in den Fig. 5 bis 7 dargestellten Kopfstütze 110, wobei gemäß dem einzigen Unterschied die Kopfanlagefläche 117 mit einem Kissen 127 versehen ist. Die Kopfanlagefläche 117 ist daher nur mittelbare Kopfanlage, da der Kopf des Sitzinsassen an dem Kissen 127 anliegt. Das Kissen 127 hat den Vorteil, dass auf die Kopfanlagefläche 117 einwirkende Kräfte von dem Kissen 127 verteilt werden. Darüber hinaus macht das Kissen die Kopfanlage komfortabler. Außerdem ist das Kissen 127 unter hygienischen Gesichtspunkten vorteilhaft, weil es lösbar an der Kopfanlagevorrichtung befestigbar ist und somit gereinigt werden kann. Das Kissen 127 kann mit allen Ausführungsbeispielen von Kopfstützen 10, 110, 210 und 310 dieser Anmeldung kombiniert werden.

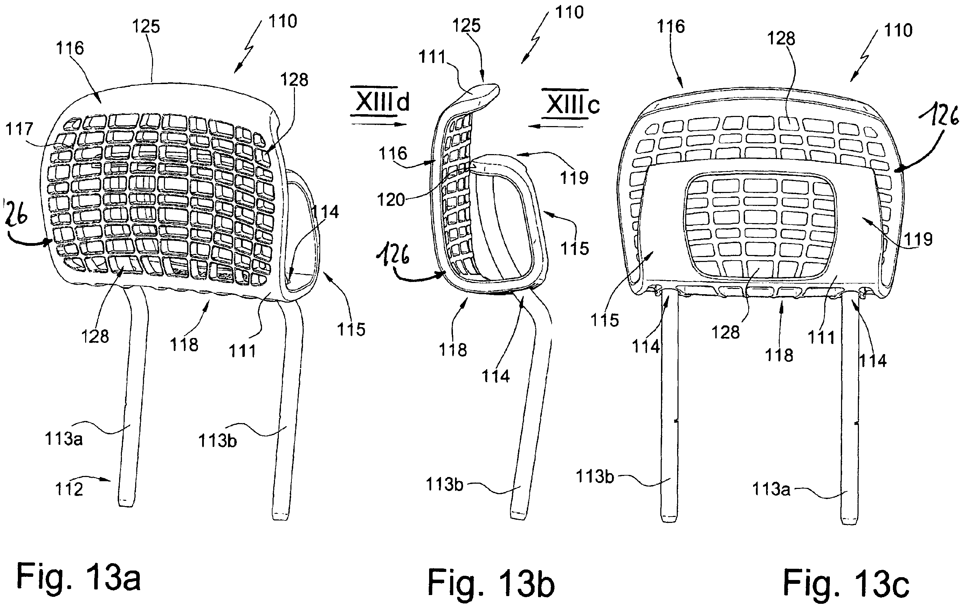

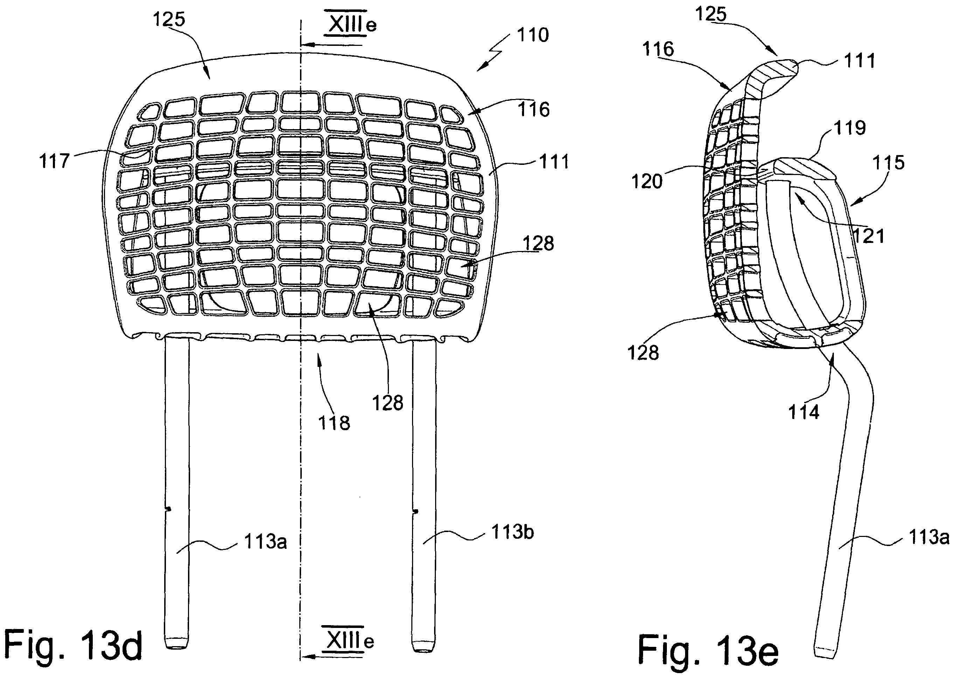

Die in den Fig. 13a bis 13e dargestellte Kopfstütze 110 gemäß einem weiteren Ausführungsbeispiel entspricht der Kopfstütze 110 gemäß der Fig. 5 bis 7, wobei der Kopfanlagebereich 116 nicht mit der federnden Struktur 122 versehen ist, sondern im Wesentlichen zu dem Rahmen 126 des Kopfanlagebereichs 116 unverformbar, also starr ausgebildet ist. Der Rahmen des Kopfanlagebereichs 116 ist aber wie oben beschrieben aufgrund der Verformbarkeit der Kopfanlagevorrichtung 111 zu dem Lagerbereich 115 bewegbar. Der Kopfanlagebereich 116 umfasst Aussparungen 128, so dass eine Gitterstruktur gebildet ist.

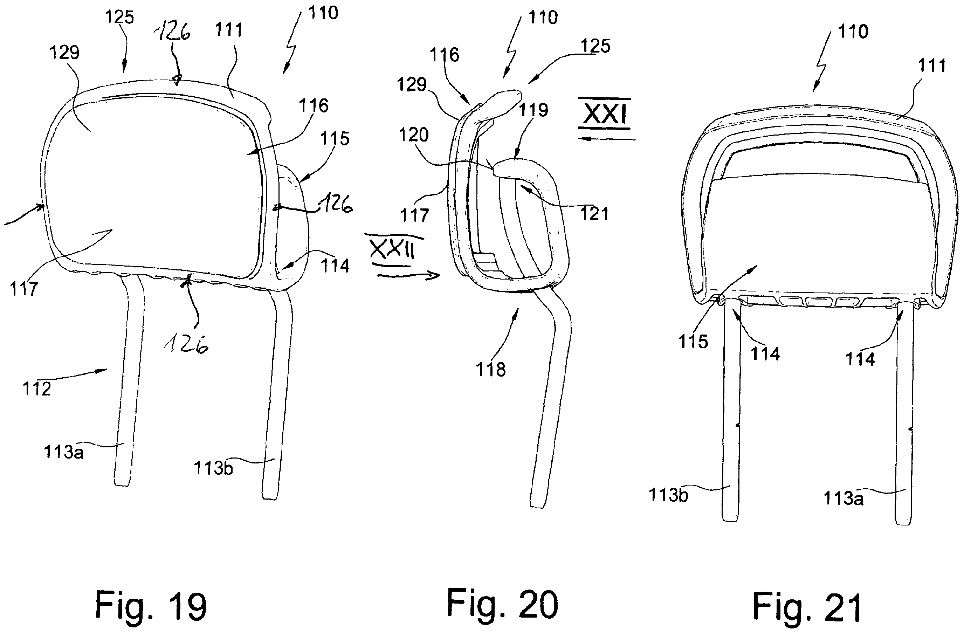

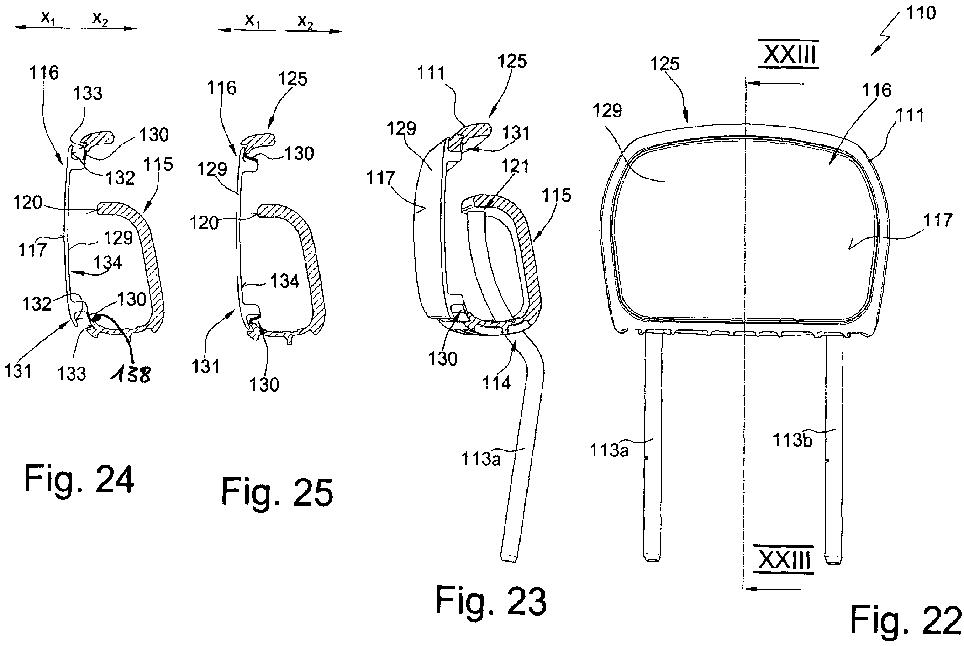

In den Fig. 19 bis 25 ist eine weitere Variante der in den Fig. 5 bis 7 dargestellten Kopfstütze 110 beschrieben. In Bezug auf diese Variante wird verwiesen auf die Anmeldung mit dem Aktenzeichen DE 10 2017 129 830.4. Der Kopfanlagebereich 116 umfasst bei diesem Ausführungsbeispiel ein gesondertes, im Wesentlichen starres Federteil 129, welches die Kopfanlagefläche 117 bildet. In den Fig. 23 bis 25 ist erkennbar, dass das Federteil 129 mittels einer Membran 130 an einer Laibung 138 einer in dem Kopfanlagebereich 116 ausgebildeten Aussparung 131 befestigt ist, die von dem Rahmen 126 gebildet ist. Die Membran kann von jedem elastisch verformbaren Material gebildet sein. Sie ist z.B. von einem kautschukartigen Material gebildet. Alternativ zu der umlaufenden Membran 130 kann das Federteil 129 auch mittels einzelner über den Umfang verteilter Federn mit dem Kopfanlagebereich 116 verbunden sein.

Unter Wirkung einer Kraft F auf die Kopfanlagefläche 117 wird das Federteil 129 zunächst unter elastischer Verformung der Membran 130 soweit in Richtung x2 bewegt, bis eine Randfläche 132 des Federteils 129 an einer Anschlagfläche 133 der Kopfanlagevorrichtung 111 anschlägt (siehe Fig. 25). Bei Einwirkung einer großen Kraft F könnte sich der ganze Kopfanlagebereich 116 mit dem Rahmen nach dem oben beschriebenen Anschlag soweit verlagern, bis eine Rückfläche 134 des Federteils 129 an der Prallfläche 120 anschlägt. Aufgrund der elastischen Rückstellkraft nehmen der Kopfanlagebereich 116 sowie das Federteil 129 nach Entlastung wieder die Ausgangsposition gemäß Fig. 24 ein.

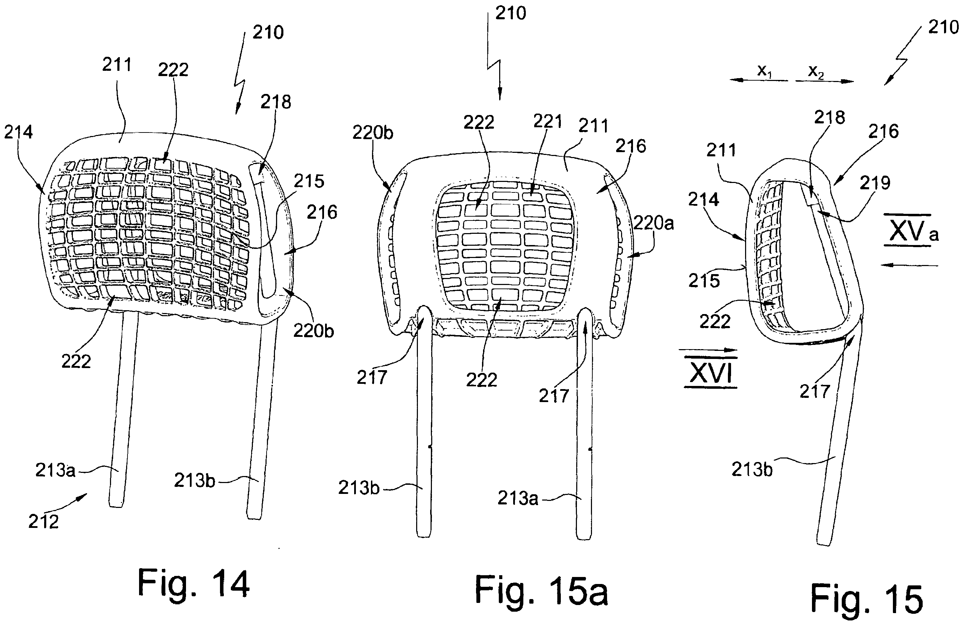

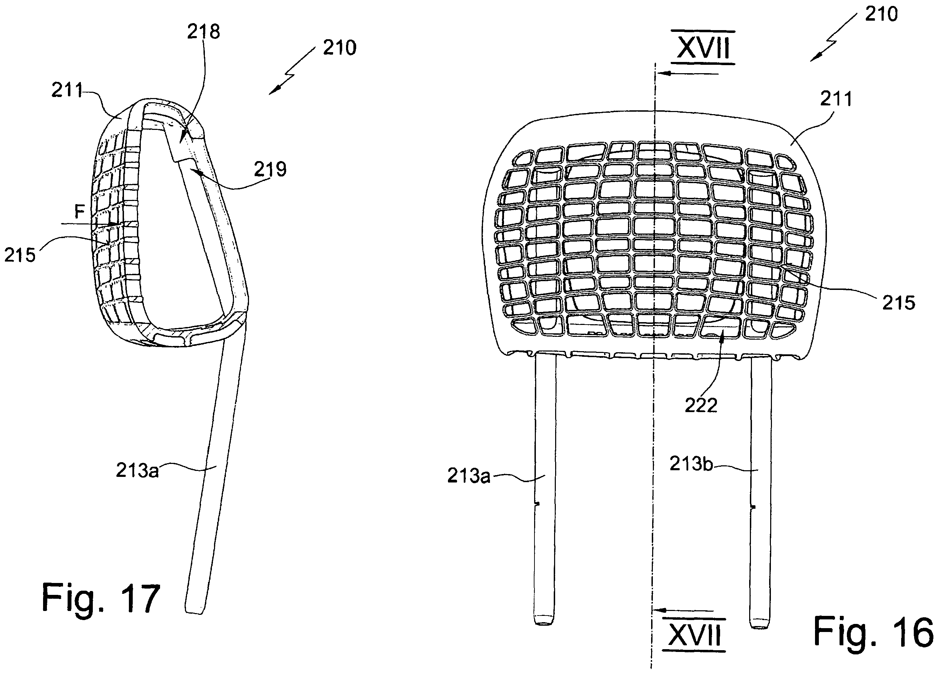

In den Fig. 14 bis 17 ist ein anderes Ausführungsbeispiel einer Kopfstütze 210 dargestellt. Diese Kopfstütze 210 ist nicht Teil der vorliegenden Erfindung. Die Kopfstütze 210 umfasst eine Kopfanlagevorrichtung 211 in Form eines gesonderten Teiles, die mit einer Lagervorrichtung 212 an einem Fahrzeugsitz höhenverstellbar oder fest gelagert werden kann. Die Lagervorrichtung 212 umfasst Tragstangen 213a, 213b, welche fest mit der Kopfanlagevorrichtung 211 verbunden sind. Die Tragstangen 213a und 213b sind fest oder höhenverstellbar an einem Fahrzeugsitz gelagert. Alternativ zu den Tragstangen 213a und 213b könnte auch ein Tragstangenbügel verwendet werden. Gemäß einer weiteren Alternative könnte die Lagervorrichtung 212 einen Bereich aufweisen, der einteilig - z.B. aus Kunststoffspritzguss - mit der Kopfanlagevorrichtung 211 herstellbar ist und der an dem Fahrzeugsitz gelagert werden kann.

Die Kopfanlagevorrichtung 211 ist entsprechend der in Fig. 15 dargestellten Seitenansicht etwa O-förmig geformt und insgesamt etwa rohr- oder hülsenförmig ausgebildet. Die Kopfanlagevorrichtung 211 weist einen Kopfanlagebereich 214 mit einer Kopfanlagefläche 215 sowie einen Lagerbereich 216 auf. Der Kopfanlagebereich 214 ist schaumlos hergestellt und von einem Vollmaterial gebildet. Der Lagerbereich 216 umfasst Aussparungen 217, die von den Tragstangen 213a und 213b durchgriffen werden sowie Aufnahmesitze 218, in welchen obere Endbereiche 219 der Tragstangen 213a und 213b aufgenommen und befestigt sind.

Die Kopfanlagevorrichtung 211 weist seitlich Aussparungen 220a und 220b sowie eine rückwärtige Aussparung 221 in dem Lagerbereich 216 auf. Der Kopfanlagebereich 214 ist mit Aussparungen 222 versehen, so dass ein Gitter gebildet ist. Das Material der Kopfanlagevorrichtung 211 ist im Wesentlichen unverformbar.

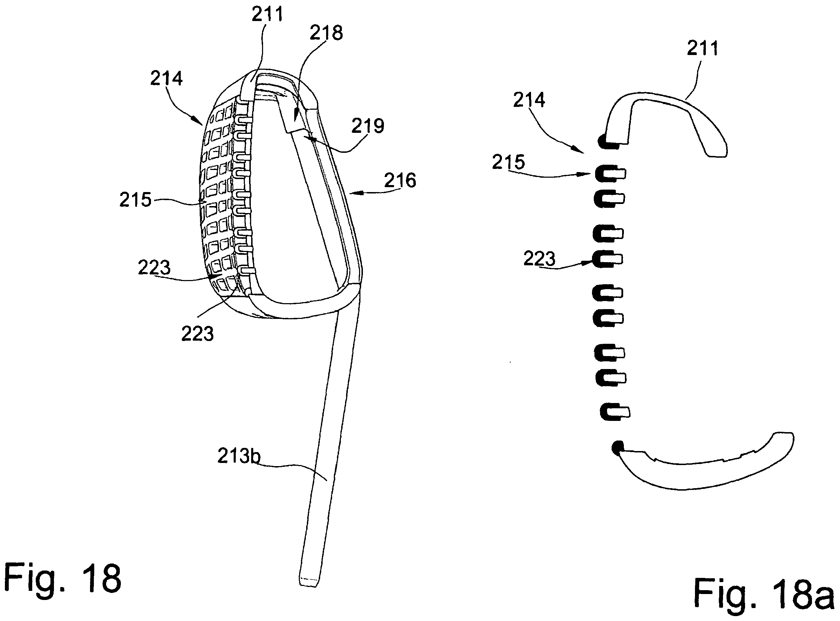

Die in den Fig. 18 und 18a dargestellte Kopfstütze 210 ist nicht Teil der vorliegenden Erfindung. Sie entspricht der Kopfstütze 210 der Fig. 14 bis 17, wobei die Kopfanlagefläche 215 mit einer Weichkomponente 223 versehen ist, die eine komfortable Anlage des Sitzinsassen gewährleistet. Die Weichkomponente 223 kann z.B. von einem Silikon gebildet sein. Die Weichkomponente 223 kann z.B. zusammen mit der Kopfanlagevorrichtung 211 - z.B. im 2-K-Spritzgießverfahren - hergestellt werden. Wie z.B. in Fig. 23 erkennbar, umgreift die Weichkomponente 223 die von den Aussparungen 222 gebildeten Stege des Kopfanlagebereichs 214 bis in eine Laibung der Aussparung 222.

## Patentansprüche

1. Kopfstütze für einen Sitz, insbesondere einen Fahrzeugsitz, mit einer Kopfanlagevorrichtung (111) mit einem Kopfanlagebereich (116), der eine Kopfanlagefläche (117) ausbildet sowie mit einer Lagervorrichtung (112), wobei die Kopfanlagevorrichtung (111) an der Lagervorrichtung (112) gelagert ist und wobei die Lagervorrichtung (112) an einem Fahrzeugsitz lagerbar ist,
wobei die Kopfanlagevorrichtung (111) einteilig, insbesondere als Kunststoffspritzgießteil, ausgebildet ist, und
wobei die Kopfanlagevorrichtung (111) als geformte Platte ausgebildet ist, **dadurch gekennzeichnet, dass** der Kopfanlagebereich (116) ein freies Ende und freie Seitenbereiche (137a, 137b) aufweist und ein unterer Endbereich des Kopfanlagebereichs (116) mit der Lagervorrichtung (112) verbunden ist, wobei ein Lagerbereich (115) der Kopfanlagevorrichtung (111) klammerartig geformt ist und einen horizontal verlaufenden unteren Bereich (118), einen weiteren horizontal verlaufenden Abschnitt (119) sowie einen vertikal verlaufenden Bereich (136) aufweist.

2. Kopfstütze nach Anspruch 1, **dadurch gekennzeichnet, dass** die Platte aus Vollmaterial gebildet ist.

3. Kopfstütze nach Anspruch 1 oder 2, **dadurch gekennzeichnet, dass** die Platte schaumfrei ausgebildet ist.

4. Kopfstütze nach einem der vorangehenden Ansprüche, **dadurch gekennzeichnet, dass** der Kopfanlagebereich (116) einen Rahmen (126) bildet.

5. Kopfstütze nach Anspruch 4, **dadurch gekennzeichnet, dass** der Rahmen (126) steif ausgebildet ist und eine elastisch verformbare Struktur (122), die wenigstens teilweise die Kopfanlagefläche (117) bildet, an dem Rahmen gehalten ist.

6. Kopfstütze nach Anspruch 4, **dadurch gekennzeichnet, dass** der Rahmen (126) steif ausgebildet ist und dass an dem Rahmen (126) eine Folie, insbesondere eine transparente Folie, oder ein Netz gehalten ist, wobei die Folie oder das Netz wenigstens teilweise die Kopfanlagefläche (117) bildet.

7. Kopfstütze nach einem der vorangehenden Ansprüche, **dadurch gekennzeichnet, dass** die Kopfanlagevorrichtung (111) und / oder die Lagervorrichtung (112) eine Prallfläche (120) für den Kopfanlagebereich (116) bildet.

8. Kopfstütze nach einem der vorangehenden Ansprüche, **dadurch gekennzeichnet, dass** der Kopfanlagebereich (116) mit einer elastischen Struktur (122) versehen ist.

9. Kopfstütze nach einem der vorangehenden Ansprüche, **dadurch gekennzeichnet, dass** der Kopfanlagebereich (116) wenigstens teilweise eine Struktur bildet, die als Gitter oder als Folie ausgebildet ist.

10. Kopfstütze nach einem der vorangehenden Ansprüche, **dadurch gekennzeichnet, dass** die Kopfanlagefläche (117) mit einer Schicht aus einem weichen Material versehen ist.

## Claims

1. Head support for a seat, in particular a vehicle seat, having a head contact device (111) with a head contact region (116), which forms a head contact surface (117) and having a bearing device (112), wherein the head contact device (111) is mounted on the bearing device (112) and wherein the bearing device (112) can be mounted on a vehicle seat,
wherein the head contact device (111) is formed as one-piece, in particular as a plastic injection moulded part, and
wherein the head contact device (111) is formed as a shaped plate, **characterised in that** the head contact region (116) has a free end and free side regions (137a, 137b) and a lower end region of the head contact region (116) is connected to the bearing device (112), wherein a bearing region (115) of the head contact device (111) is formed like a clamp and has a lower region (118) extending horizontally, a further section (119) extending horizontally and a region (136) extending vertically.

2. Head support according to claim 1, **characterised in that** the plate is formed from a solid material.

3. Head support according to claim 1 or 2, **characterised in that** the plate is formed without foam.

4. Head support according to one of the preceding claims, **characterised in that** the head contact region (116) forms a frame (126).

5. Head support according to claim 4, **characterised in that** the frame (126) is stiff and an elastically deformable structure (122), which at least partially forms the head contact surface (117), is held on the frame.

6. Head support according to claim 4, **characterised in that** the frame (126) is stiff and **in that** a foil, in particular a transparent foil, or a net is held on the frame (126), wherein the foil or the net at least partially forms the head contact surface (117).

7. Head support according to one of the preceding claims, **characterised in that** the head contact device (111) and/or the bearing device (112) forms an impact surface (120) for the head contact region (116).

8. Head support according to one of the preceding claims, **characterised in that** the head contact region (116) is provided with an elastic structure (122).

9. Head support according to one of the preceding claims, **characterised in that** the head contact region (116) at least partially forms a structure which is formed as a grid or as a foil.

10. Head support according to one of the preceding claims, **characterised in that** the head contact surface (117) is provided with a layer consisting of a soft material.

## Revendications

1. Appuie-tête pour un siège, en particulier un siège de véhicule, comprenant un dispositif d'appui pour la tête (111) présentant une zone d'appui pour la tête (116) qui constitue une surface d'appui pour la tête (117), ainsi qu'un dispositif de support (112), dans lequel le dispositif d'appui pour la tête (111) est agencé sur le dispositif de support (112) et le dispositif de support (112) peut être monté sur un siège de véhicule, dans lequel le dispositif d'appui pour la tête (111) est réalisé d'une seule pièce, en particulier sous la forme d'une pièce en matière plastique moulée par injection, et dans lequel le dispositif d'appui pour la tête (111) est réalisé sous la forme d'une plaque moulée, **caractérisé en ce que** la zone d'appui pour la tête (116) présente une extrémité libre ainsi que des régions latérales libres (137a, 137b) et **en ce qu'**une région d'extrémité inférieure de la zone d'appui pour la tête (116) est connectée au dispositif de support (112), et dans lequel une région de support (115) du dispositif d'appui pour la tête (111) est réalisée sous la forme d'une agrafe et présente une zone inférieure s'étendant horizontalement (118), une région supplémentaire s'étendant horizontalement (119) ainsi qu'une région s'étendant verticalement (136).

2. Appuie-tête selon la revendication 1, **caractérisé en ce que** la plaque est constituée d'un matériau solide.

3. Appuie-tête selon la revendication 1 ou 2, **caractérisé en ce que** la plaque est réalisée sans mousse.

4. Appuie-tête selon l'une quelconque des revendications précédentes, **caractérisé en ce que** la zone d'appui pour la tête (116) forme un cadre (126).

5. Appuie-tête selon la revendication 4, **caractérisé en ce que** le cadre (126) est rigide et une structure élastiquement déformable (122) qui constitue au moins partiellement la surface d'appui pour la tête (117) est maintenue sur le cadre.

6. Appuie-tête selon la revendication 4, **caractérisé en ce que** le cadre (126) est rigide et **en ce qu'**un film, en particulier un film transparent ou un filet, est maintenu sur le cadre (126), et dans lequel le film ou le filet constitue au moins partiellement la surface d'appui pour la tête (117).

7. Appuie-tête selon l'une quelconque des revendications précédentes, **caractérisé en ce que** le dispositif d'appui pour la tête (111) et/ou le dispositif de support (112) forme(nt) une surface d'impact (120) pour la zone d'appui pour la tête (116).

8. Appuie-tête selon l'une quelconque des revendications précédentes, **caractérisé en ce que** la zone d'appui pour la tête (116) est pourvue d'une structure élastique (122).

9. Appuie-tête selon l'une quelconque des revendications précédentes, **caractérisé en ce que** la zone d'appui pour la tête (116) forme au moins partiellement une structure qui est réalisée sous la forme d'une grille ou d'un film.

10. Appuie-tête selon l'une quelconque des revendications précédentes, **caractérisé en ce que** la surface d'appui pour la tête (117) est pourvue d'une couche d'un matériau souple.
